# EUROPÄISCHE PATENTSCHRIFT

(11) **EP 2 634 779 B1**
(45) Veröffentlichungstag und Bekanntmachung des Hinweises auf die Patenterteilung: **14.06.2017**
(21) Anmeldenummer: 12290069.9
(22) Anmeldetag: 01.03.2012
(51) Int. Cl.: H01B 12/02, H01B 12/06

(54) **System mit einem dreiphasigen supraleitfähigen elektrischen Übertragungselement**
System with a three-phase superconducting electric transmission element
Système doté d'un élément de transmission électrique supraconducteur triphasé

(43) Veröffentlichungstag der Anmeldung: 04.09.2013
(73) Patentinhaber: Nexans, 75008 Paris (FR)
(72) Erfinder: Stemmle, Mark, Dr., 30625 Hannover (DE); West, Beate, Dr., 30163 Hannover (DE)
(74) Vertreter: Döring, Roger

(56) Entgegenhaltungen:
- EP-A1- 1 860 666
- EP-A1- 2 228 806
- CH-A- 484 546
- JP-A- 10 106 364

## Beschreibung

Die Erfindung bezieht sich auf ein System mit einem dreiphasigen supraleitfähigen elektrischen Übertragungselement entsprechend dem Oberbegriff des Patentanspruchs 1 (WO 2004/013868 A2).

Supraleitfähige Kabel haben in heutiger Technik elektrische Leiter aus einem Verbundstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rare-earth-Barium-Kupfer-Oxid), insbesondere YBCO (Yttrium-Barium-Kupfer-Oxid), als Materialien der 2. Generation. Ausreichend niedrige Temperaturen, um ein derartiges Material in den supraleitfähigen Zustand zu bringen, liegen beispielsweise zwischen 67 K und 90 K. Geeignete Kühlmittel sind beispielsweise Stickstoff, Helium, Neon und Wasserstoff oder Gemische dieser Stoffe.

Aus der EP 2 228 806 A1 geht eine Anordnung zur Strombegrenzung hervor, welche Komponenten aufweist, die aus jeweils drei Phasenleitern aus einem supraleitfähigen Material bestehen, welche gegeneinander isoliert konzentrisch zueinander angeordnet sind. Die Komponenten sind in einem Kryostat angeordnet, der aus zwei konzentrisch zueinander angebrachten, metallischen Rohren besteht, zwischen denen eine Vakuumisolierung angebracht ist. In dem Kryostat sind "n" Komponenten vorhanden, deren Phasenleiter zyklisch derart elektrisch leitend miteinander verbunden sind, daß der innen liegende Phasenleiter jeder Komponente mit dem mittleren Phasenleiter einer zweiten Komponente und dieser mittlere Phasenleiter mit dem außen liegenden Phasenleiter der dritten Komponente verbunden ist, mit n = 3 oder ein ganzzahliges Vielfaches von 3.

Die CH 484 546 A beschreibt eine elektrische Energieerzeugungs- und Übertragungseinrichtung, bei welcher ein Übertragungselement eingesetzt ist, das drei supraleitfähige elektrische Phasenleiter aufweist, die gegeneinander isoliert und konzentrisch zueinander angeordnet sind. Es ist in einem thermisch isolierten, rohrförmigen Kryostat angeordnet. Das Übertragungselement weist Kabel auf, von denen jedes drei gegeneinander isolierte und konzentrisch zueinander angeordnete supraleitfähige elektrische Phasenleiter hat. Die Phasenleiter der Kabel sind elektrisch parallel geschaltet.

Das bekannte System nach der eingangs erwähnten WO2004/013868 A2 weist als Übertragungselement ein supraleitfähiges elektrisches Kabel auf, in dem drei Phasenleiter gegeneinander isoliert, konzentrisch zueinander angeordnet sind. Unter Einschluß einer weiteren Isolierschicht ist außerdem als vierter Leiter konzentrisch um die drei Phasenleiter herum ein Neutralleiter angebracht. Die kompakte Anordnung mit vier Leitern aus supraleitfähigem Material liegt in einem Kryostat und wird beim Betrieb des Übertragungssystems zum Erreichen der Supraleitfähigkeit gekühlt. Die einzelnen Phasenleiter bestehen aus mehreren Schichten aus supraleitfähigen Bändern. Die Anzahl der Bänder und damit die Leiterquerschnitte hängen von der zu übertragenden Leistung ab.

Der Erfindung liegt die Aufgabe zugrunde, den Aufbau eines Übertragungselements für ein System der eingangs geschilderten Art zu vereinfachen.

Diese Aufgabe wird entsprechend den kennzeichnenden Merkmalen des Patentanspruchs 1 gelöst.

Durch den Aufbau des Übertragungselements aus drei Kabeln kann der Querschnitt der Phasenleiter der drei Kabel gegenüber der einteiligen Version des Übertragungselements kleiner ausgeführt werden, mit entsprechend vereinfachter Fertigung. Die Kabel sind identisch aufgebaut. Es kann dazu ein dreiphasiges Kabel in großer Länge gefertigt werden, von dem Kabellängen mit vorgegebener Länge als miteinander zu verbindende Kabel abgetrennt werden. Die Fertigung des Übertragungselements für das System ist dadurch weiter vereinfacht. Bei entsprechender Bemessung der Phasenleiter der Kabel können mit diesem System im Vergleich zum bekannten System wesentlich höhere Leistungen transportiert werden. Die elektrischen Verluste sind bei gleicher Leistung gegenüber dem bekannten System vermindert, da in den Kabeln geringere Magnetfelder auftreten. Zwischen den Kabeln tritt außerdem keine magnetische Beeinflussung auf. Dadurch, daß die Phasenleiter der drei Kabel mit zyklischem Platztausch elektrisch parallel geschaltet sind, sind die elektrischen Parameter für jede Phase gleich und das System ist somit auch elektrisch symmetrisch.

Die bei der thermischen Kontraktion beim Abkühlen des Systems insgesamt entstehenden Kräfte sind dann herabgesetzt, wenn die Kabel miteinander verseilt sind.

Ein Ausführungsbeispiel des Erfindungsgegenstandes ist in den Zeichnungen dargestellt.

Es zeigen:
Fig. 1 den prinzipiellen Aufbau eines in dem System nach der Erfindung einsetzbaren supraleitfähigen Kabels im Schnitt.
Fig. 2 einen Schnitt durch eine Ausführungsform des Systems nach der Erfindung in gegenüber Fig. 1 verkleinerter Darstellung.
Fig. 3 schematisch die elektrische Verbindung von in dem System eingesetzten Kabeln.

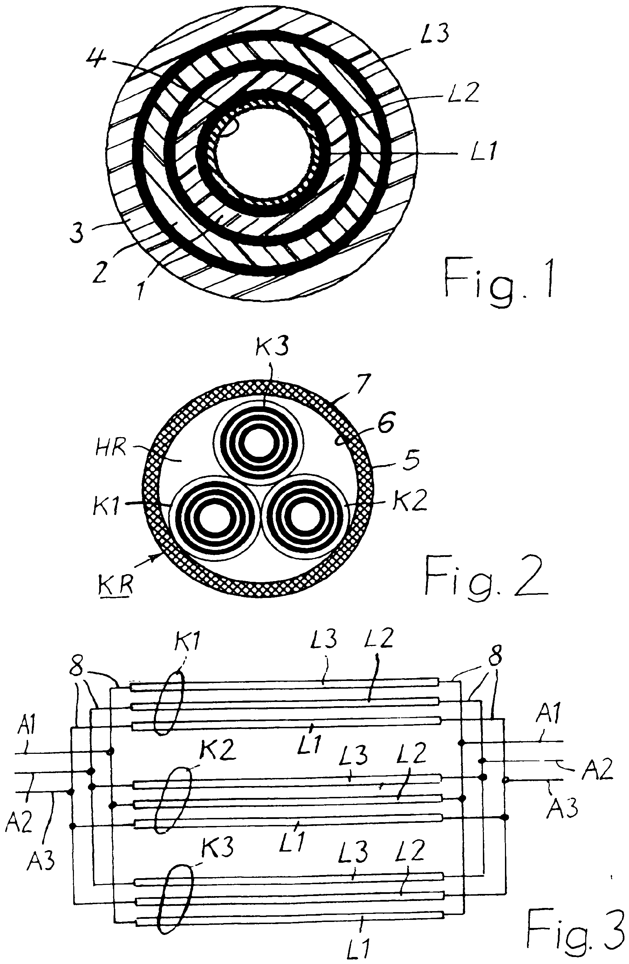

Das System nach der Erfindung hat als Übertragungselement drei identisch aufgebaute Kabel, deren Phasenleiter parallel geschaltet sind. Zum besseren Verständnis des Systems wird zunächst anhand von Fig. 1 der prinzipielle Aufbau von in demselben verwendeten supraleitfähigen Kabeln erläutert.

Das supraleitfähige Kabel nach Fig. 1 hat drei konzentrisch zueinander angeordnete, supraleitfähige Phasenleiter L1, L2 und L3. Die Phasenleiter L1 und L2 sind durch Schichten 1 und 2 aus Isoliermaterial gegeneinander isoliert. Um den außen liegenden Phasenleiter L3 ist eine weitere Schicht 3 aus Isoliermaterial angeordnet, über welcher zusätzlich ein nicht mit dargestellter Neutralleiter angebracht sein könnte. Ein solcher Neutralleiter kann beispielsweise bei Belastung mit einem unsymmetrischen Stromsystem ein gemeinsamer Rückleiter für alle Phasenleiter sein. Der innen liegende Phasenleiter L1 ist um einen Träger 4 herum angebracht, der im dargestellten Ausführungsbeispiel als Rohr ausgeführt ist. Der Träger 4 kann auch ein massiver Strang sein. Es ist auch möglich, ein Kabel mit einem rohrförmigen Träger 4 und das andere Kabel mit einem massiven Träger 4 auszurüsten. Der Träger 4 kann aus Metall, insbesondere aus Edelstahl, aber auch aus Kunststoff bestehen. Als Rohr aus Metall kann er auch quer zu seiner Längsrichtung gewellt sein.

Das Übertragungselement des Systems besteht gemäß Fig. 2 aus drei supraleitfähigen Kabeln K1, K2 und K3, die mit Vorteil mit langem Schlag miteinander verseilt sind. Die entsprechende Schlaglänge liegt beispielsweise zwischen 5 x D und 15 x D, mit dem Durchmesser D der Kabel. Die Kabel K1, K2 und K3 sind in einem Kryostat KR angeordnet, der auch einen Hohlraum HR zum Durchleiten eines Kühlmittels umschließt. Wenn der Träger 4 mindestens eines der Kabel K1, K2 oder K3 ein Rohr ist, kann das Kühlmittel zusätzlich auch durch dasselbe geleitet werden.

Der Kryostat KR besteht beispielsweise aus zwei mit Abstand konzentrisch zueinander angeordneten metallischen Rohren 5 und 6, zwischen denen eine Vakuumisolierung 7 angeordnet ist. Er soll zumindest ein thermisch isoliertes Rohr aus Metall haben. Die Rohre 5 und 6 und das gegebenenfalls vorhandene, thermisch isolierte Rohr bestehen vorzugsweise aus Edelstahl. Sie können mit Vorteil quer zu ihrer Längsrichtung gewellt sein.

Die drei Phasenleiter L1, L2 und L3 der Kabel werden im folgenden der Einfachheit und Klarheit halber als "innerer Leiter L1 ", "mittlerer Leiter L2" und "äußerer Leiter L3" bezeichnet. Die Durchverbindung der Phasenleiter der Kabel K1, K2 und K3 erfolgt entsprechend der Darstellung in Fig. 3 mit zyklischem Platztausch der Phasenleiter. Das Übertragungselement wird dadurch elektrisch symmetrisch. Im Normalbetrieb kann daher eine magnetische Beeinflussung der Kabel untereinander ausgeschlossen werden.

In Fig. 3 sind nur die drei Phasenleiter der drei Kabel angedeutet. Sie können durch supraleitfähige Drähte 8, für die als supraleitfähiges Material vorzugsweise ReBCO oder BSCCO eingesetzt ist, beispielsweise wie folgt miteinander verbunden werden:

Der äußere Leiter L3 des Kabels K1 wird mit dem mittleren Leiter L2 des Kabels K2 und dem inneren Leiter L1 des Kabels K3 verbunden. Der mittlere Leiter L2 des Kabels K1 wird mit dem inneren Leiter L1 des Kabels K2 und dem äußeren Leiter L3 des Kabels K3 verbunden. Außerdem wird der innere Leiter L1 des Kabels K1 mit dem äußeren Leiter L3 des Kabels K2 und dem mittleren Leiter L2 des Kabels K3 verbunden. Die Phasenleiter der drei Kabel sind so mit Platztausch parallel zueinander geschaltet. Am Eingang und am Ausgang des Übertragungselements stehen damit jeweils drei supraleitfähige Anschlußleiter A1, A2 und A3 mit einem dem Querschnitt der Phasenleiter entsprechenden elektrisch leitenden Querschnitt zur Verfügung.

## Patentansprüche

1. System mit einem dreiphasigen supraleitfähigen elektrischen Übertragungselement, in welchem drei supraleitfähige elektrische Phasenleiter gegeneinander isoliert und konzentrisch zueinander angeordnet sind und welches in einem thermisch isolierten, rohrförmigen Kryostat (KR) angeordnet ist, der einen Freiraum (HR) zum Durchleiten eines Kühlmediums aufweist, **dadurch gekennzeichnet,**
- **daß** das Übertragungselement aus drei identisch aufgebauten Kabeln (K1,K2,K3) besteht, von denen jedes drei gegeneinander isolierte und konzentrisch zueinander angeordnete supraleitfähige elektrische Phasenleiter (L1,L2,L3) hat, und
- **daß** die Phasenleiter (L1,L2,L3) der drei Kabel (K1,K2,K3) mit zyklischem Platztausch jeweils derart elektrisch leitend miteinander parallel verbunden sind, daß der innen liegende Phasenleiter (L1) eines ersten Kabels mit dem mittleren Phasenleiter (L2) eines zweiten Kabels und weiterführend mit dem außen liegenden Phasenleiter (L3) eines dritten Kabels verbunden ist, wobei die drei Kabel (K1,K2,K3) für die Durchverbindung ihrer Phasenleiter sowohl erstes als auch zweites als auch drittes Kabel sind.

2. System nach Anspruch 1, **dadurch gekennzeichnet, daß** die Kabel (K1,K2,K3) miteinander verseilt sind.

## Claims

1. A system having a three phase superconductive electrical transmission element, in which three superconductive electrical phase conductors which are insulated relative to each other are arranged concentrically to each other and which is mounted within a thermally insulated, tubular cryostat (KR) which has a free space (HR) for conducting a cooling medium therethrough, **characterized in**
- **that** the transmission element comprises three identically constructed cables (K1, K2, K3), wherein each of the cables has three superconductive electrical phase conductors (L1,L2,L3) arranged insulated relative to each other and concentrically to each other, and
- **that** the phase conductors (L1,L2,L3) of the three cables (K1,K2,K3) are switched electrically in parallel in such a way that the inner phase conductor (L1) of a first cable is connected to the middle phase conductor (2) of a second cable and further on to the outer phase conductor (L3) of a third cable, wherein the three cables (K1,K2,K3) for the through-connection of their phase conductors, are first cable as well as second cable as well as third cable.

2. A system according to claim 1, **characterized in that** the cables (K1,K2,K3) are stranded with each other.

## Revendications

1. Système comprenant un élément de transmission électrique supraconducteur triphasique, dans lequel trois conducteurs de phase électriques supraconducteurs sont mutuellement isolés et sont disposés de manière concentrique les uns par rapport aux autres, et qui est disposé dans un cryostat (KR) tubulaire isolé thermiquement, lequel possède un espace libre (HR) destiné à laisser passer un fluide de refroidissement, **caractérisé en ce**
- **que** l'élément de transmission se compose de trois câbles (K1, K2, K3) de structure identique dont chacun comporte trois conducteurs de phase (Ll, L2, L3) électriques supraconducteurs mutuellement isolés et disposés de manière concentrique les uns par rapport aux autres, et
- **que** les conducteurs de phase (Ll, L2, L3) des trois câbles (K1, K2, K3) sont respectivement reliés électriquement en parallèle avec changement de place cyclique de telle sorte que le conducteur de phase interne (L1) d'un premier câble est relié au conducteur de phase central (L2) d'un deuxième câble et, dans la continuité, au conducteur de phase externe (L3) d'un troisième câble, les trois câbles (K1, K2, K3) étant aussi bien un premier qu'un deuxième et un troisième câble pour la liaison transversale de leurs conducteurs de phase.

2. Système selon la revendication 1, **caractérisé en ce que** les câbles (K1, K2, K3) sont toronnés ensemble.
